# EUROPEAN PATENT SPECIFICATION

(11) **EP 2 299 526 B1**
(45) Date of publication and mention of the grant of the patent: **12.06.2013**
(21) Application number: 10160115.1
(22) Date of filing: 16.04.2010
(51) Int. Cl.: H01M 8/02

(54) **Fuel cell interconnector having excellent electrical conductivity, oxidation resistance, and low chromium volatility and method of manufacturing the same**
Brennstoffzellenverbinder mit ausgezeichneter elektrischer Leitfähigkeit, Oxidationsbeständigkeit und geringer Chromflüchtigkeit sowie Herstellungsverfahren dafür
Interconnecteur de pile à combustible doté d'une excellente conductivité, résistance à l'oxydation et faible volatilité du chrome et procédé de fabrication correspondant

(30) Priority: 17.09.2009 KR 20090088133
(43) Date of publication of application: 23.03.2011
(73) Proprietor: Korea Institute of Science and Technology, Seoul 136-791 (KR)
(72) Inventor: Kim, Dong Ik, Seoul (KR); Han, Seung Hee, Nowon-gu Seoul (KR); Cho, Young Whan, Seoungbuk-gu Seoul (KR); Hong, Seung Hee, Seoul (KR); Kim, Hae Ryoung, Gangnam-gu Seoul (KR); Jung, Woo Sang, Gwangjin-gu Seoul (KR); Shim, Jae Hyeok, Gwangjin-gu Seoul (KR); Lee, Young Su, Seongbuk-gu Seoul (KR); Suh, Jin Yoo, Seoul (KR)
(74) Representative: Swinkels, Bart Willem

(56) References cited:
- KR-B1- 100 887 831
- US-A1- 2006 286 432
- US-A1- 2007 077 481
- US-B2- 7 390 582

## Description

### CROSS-REFERENCE TO RELATED APPLICATIONS

This application claims the priority of Korean Patent Application No. 10-2009-0088133 filed on September 17, 2009, in the Korean Intellectual Property Office.

### BACKGROUND OF THE INVENTION

### Field of the Invention

The present invention relates to a method of manufacturing a fuel cell interconnector, more particularly a fuel cell interconnector that reduces chromium volatilization and increases electrical conductivity and oxidation resistance by promoting the formation of a spinel oxide layer through a surface-deformed layer.

### Description of the Related Art

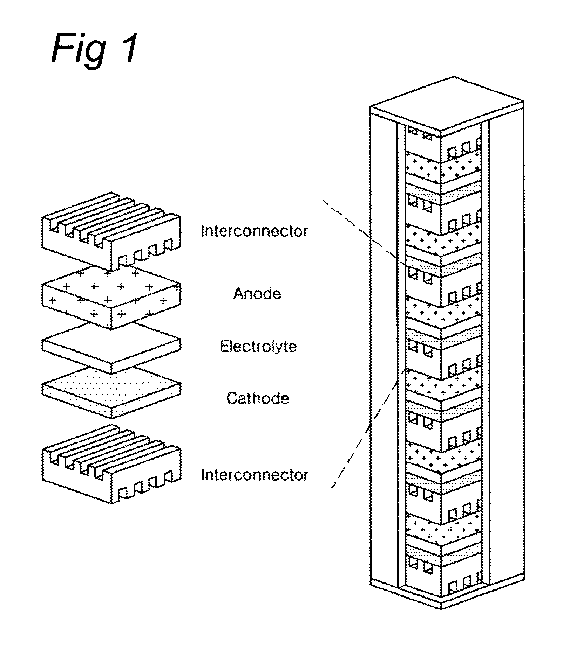

As shown in FIG. 1, unit cells, each consisting of an anode, an electrolyte, and a cathode, and interconnectors connecting these unit cells are stacked upon one another to thereby form a fuel cell.

Among these components of the fuel cell, the interconnectors serve as both connectors interconnecting the individual unit cells to each other and separators separating the air from fuel being supplied from the fuel cell. Therefore, the interconnectors inside the fuel cell require high electrical conductivity, similar thermal expansion coefficients to those of the other parts of the fuel cell, oxidation resistance at operating temperature, particularly, at a high temperature of approximately 800°C, and economical efficiency.

Graphite or ceramic materials, such as LaCrO₃ doped with Cr-5Fe-Y₂O₃, have been widely used to form existing fuel cell interconnectors. However, these materials are currently being replaced with metallic materials due to formability and cost limitations.

As for these metallic materials, which are taken into consideration to form fuel cell interconnectors, Cr-based compounds or high chromium (Cr) ferritic stainless steels are being considered. Representative examples of these Cr-based compounds or high Cr ferritic steels may include ZMG232L developed by Hitachi Metals and Crofer22 APU developed by ThyssenKrupp.

Here, ZMG232L refers to a ferritic Fe-22 Cr alloy that contains 22% Cr and has 0.04% La and 0.22% Zr added thereto. The report says that ZMG232L has a thermal expansion coefficient of 12.8×10⁻⁶/°C and exhibits excellent oxidation resistance and electrical conductivity in a temperature range of 700 to 1000°C. It also says that these characteristics of ZMG232L are associated with the characteristics of oxides to be formed on the surface under oxidizing atmosphere. That is, as for the ZMG232L alloy, oxides to be formed on the surface have densely packed structures with high adhesion and excellent electrical conductivity.

Meanwhile, Crofer22 APU, developed by ThyssenKrupp, refers to a ferritic Fe-Cr alloy, which was originally developed for an Auxiliary Power Unit (APU) on a vehicle. Here, Crofer22 APU contains a very small amount of 0.06% La in order to minimize chromium evaporation and reduce a thermal expansion coefficient. Mn and Ti are added thereto to thereby form an upper layer of (Mn,Cr)₃O₄ and a lower layer of Cr₂O₃ in an oxidizing atmosphere at high temperatures. Here, oxides (Mn,Cr)₃O₄ with a spinel structure reduce Cr evaporation.

However, since the Cr-based alloys or high Cr ferritic stainless steels have high Cr contents, volatile Cr components are generated in the operating environment of fuel cells and prevent normal electro chemical reactions, resulting in poor cell performance. In addition, excellent electrical conductivity needs to be maintained for long periods of time at high temperatures. However, oxides to be formed on the surface thereof have insufficient stability, which causes an increase in the thickness of an oxide layer over time and thus a reduction in electrical conductivity.

Recently, in order to solve these problems, technologies using surface treatments performed to control surface characteristics, particularly, the use of coatings, have started to make an appearance.

Korean Patent Application Publication No. 2007-0041028 discloses a method of forming a coating layer on a surface of a ferritic stainless steel sheet for an interconnector by using a coating solution comprising, by weight%: 5 to 25% cobalt nitrate, 0.1 to 2.0% lanthanum nitrate, and the balance of a binder, a hardening agent, and water. However, since the coating process is performed in a liquefied state, when the above-described method is applied to separators for an actual fuel cell having a fine passage through which fuel or air passes, the coating layer becomes thick and it is hard for the passage to maintain its shape.

In addition, Korean Patent Application Publication No. 2009-0068632 discloses a method of coating a contact portion of a separator for a planar solid oxide fuel cell, the contact portion in contact with a cathode electrode, with any one of nickel (Ni), cobalt (Co), and copper (Cu); coating a lower layer of the sides and bottom of a gas passage, which are not in contact with the cathode electrode, with aluminum (Al); and coating an upper layer thereof with any one of nickel (Ni), cobalt (Co), and copper (Cu). Since alumina having low electrical conductivity is formed on the material surface by this method, Cr-poisoning can be reduced, while electrical conductivity, which is one of the most crucial requirements for interconnectors for fuel cells, cannot be maintained.

Document US2006/286432 discloses a method of manufacturing a fuel cell interconnector comprising: preparing a Fe-Mn-Cr ferritic stainless steel for a fuel cell interconnector; forming a surface-deformed layer on a surface of the ferritic stainless steel; and forming a Cr₂Mn0₄ spinel oxide layer by performing heat treatment at an operating temperature of a solid oxide fuel cell.

### SUMMARY OF THE INVENTION

According to the present invention, there is provided a method of manufacturing a fuel cell interconnector having excellent electrical conductivity, oxidation resistance, and low chromium volatility, the method including: preparing a Fe-Mn-Cr ferritic stainless steel for a fuel cell interconnector; forming a surface-deformed layer on a surface of the ferritic steel by ion implantation; and forming a Cr₂MnO₄ spinel oxide layer by performing heat treatment at an operating temperature of a solid oxide fuel cell.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a schematic view illustrating a fuel cell and unit cells thereof;
FIG. 2A depicts a graph illustrating the results of performing Auger electron spectroscopic analysis of a comparative example;
FIG. 2B depicts a graph illustrating the results of performing Auger electron spectroscopic analysis of an inventive example 1;
FIG. 2C depicts a graph illustrating the results of performing Auger electron spectroscopic analysis of an inventive example 2;
FIG. 3 is a photograph obtained by observing a surface area of the inventive example 1;
FIG. 4 is a HR image analysis photograph of the inventive example 1;
FIG. 5A shows SEM photographs according to a crystal surface of the comparative example;
FIG. 5B shows SEM photographs according to a crystal surface of the inventive example 1;
FIG. 6 depicts a graph illustrating results of measuring Cr volatility rates over time of the comparative example and the inventive examples 1 and 2;
FIG. 7 depicts a graph illustrating results of measuring the Area Specific Resistances (ASR) of the comparative example and the inventive example 1; and
FIG. 8 is a graph illustrating the results of measuring the mass gain of sample with time in order to check the oxidation resistance of each of the comparative example and the inventive example 1.

### DETAILED DESCRIPTION OF THE PREFERRED EMBODIMENT

Exemplary embodiments of the present invention will now be described in detail with reference to the accompanying drawings.

The present inventors have reached the present invention, finding that the diffusion of materials can be controlled by forming deformed layers on the surfaces of interconnectors of a fuel cell in the related art to thereby control oxide layers to be formed on the surfaces, so that electrical conductivity and oxidation resistance can be increased through ideal oxide layers.

A method of manufacturing a fuel cell interconnector will now be described in detail.

A method of manufacturing a fuel cell interconnector according to the invention includes preparing a Fe-Mn-Cr ferritic stainless steel for a fuel cell interconnector, forming a surface-deformed layer on the surface of the ferritic steel by ion implantation, and promoting the formation of a Cr₂MnO₄ spinel oxide layer by heat treatment at the operating temperature of a solid oxide fuel cell.

The ferritic steel for a fuel cell interconnector is a Fe-Mn-Cr ferritic stainless steel.

According to the invention a surface-deformed layer is formed on the surface of the ferritic steel. The surface-deformed layer is formed by ion implantation.

When ion implantation is performed, pressure within an ion implantation chamber may be maintained at less than 5x10⁻⁶ Torr.

Further, before carrying out ion implantation, an inert gas, such as Ar, is injected at a pressure of up to 2x10⁻³ Torr, and plasma is then generated at 800V DC to thereby perform a plasma cleaning process of the steel surface. Here, the plasma cleaning process may last 30 minutes or longer.

As for the above-described ion implantation, carbon ions or nitrogen ions may be used. Methane (CH₄) gas may be used for carbon ion implantation, and nitrogen (N₂) gas may be used for nitrogen ion implantation.

According to the invention, a deformed layer having a deformed structure is formed on the surface of a Fe-Cr ferritic steel to be used for an interconnector. Here, the deformed structure may include a nano-crystal structure or an amorphous structure. This nano-crystal structure or amorphous structure is formed through potential integration caused by deformation. The deformed layer having this structure provides a shorter diffusion path than a general fine polycrystalline structure, thereby promoting the diffusion of Mn.

When a fuel cell is operated without forming a surface-deformed layer in the related art, chromium (Cr) is volatilized because Cr₂O₃ is mainly formed on the surface of an interconnector. However, in this invention, by forming the surface-deformed layer, the diffusion of Mn is promoted when the fuel cell is operated, thereby relatively reducing the Cr content and promoting the formation of a spinel oxide layer corresponding to Cr₂MnO₄.

After the surface-deformed layer is formed, heat treatment is performed in a temperature range of 500 to 900°C to thereby form an oxide layer. The temperature range corresponds to the operating temperature of the fuel cell. As formation of the Cr₂MnO₄ spinel oxide layer is promoted by performing the heat treatment, Cr volatility is reduced, and the electrical conductivity and the oxidation resistance of the fuel cell are increased.

Hereinafter, an interconnector of the fuel cell according to an exemplary embodiment of the invention will be described in detail.

A Cr₂MnO₄ spinel oxide layer is uniformly formed on the surface of the fuel cell interconnector according to this embodiment through the surface-deformed layer from the beginning of the operation of the fuel cell. In the related art, Cr₂O₃ oxides are mostly formed initially when the operating temperature of the fuel cell is reached, and a Cr₂MnO₄ spinel oxide layer is formed after a period of time has elapsed. However, in this invention, after the deformed structure is formed, heat treatment is performed at the operating temperature of the fuel cell to thereby obtain a fuel cell interconnector in which a Cr₂MnO₄ spinel oxide layer is formed from the beginning.

The Cr₂MnO₄ spinel oxide layer is formed, on a surface area of the interconnector, in the form of surface oxide particles having a larger size than the Cr₂O₃ oxides. With time, the entire surface area is covered with the Cr₂MnO₄ spinel oxide layer.

Hereinafter, exemplary embodiments of the invention will be described in detail. However, the invention is not limited to the exemplary embodiments of the invention to be described below.

### (Inventive example)

As for test specimens, steel sheets Crofer22APU, which are manufactured by TKS and have recently come to prominence as fuel cell interconnectors, were used. The Crofer22APU steel sheet includes, by weight%: 22.78% Cr, 0.02% Si, 0.44% Mn, 0.07% Ti, 0.004% C, 0.01% Cu, 0.05% P, 0.0086% La, and the balance of Fe and unavoidable impurities.

A surface-deformed layer was formed on the test specimens by ion implantation. Here, ion implantation was conducted under the following conditions.

The pressure within an ion implantation chamber is maintained at 5x10⁻⁶ Torr or less.

In addition, before performing ion implantation, Ar is injected at a pressure of up to 2x10⁻³ Torr, and plasma is generated at 800V DC to thereby perform a plasma cleaning process of the surface for 30 minutes or longer.

RF plasma was generated at a power of 200W by using methane (CH₄) gas for carbon ion implantation and nitrogen (N₂) gas for nitrogen ion implantation, thereby performing ion implantation. The detailed conditions therefor are shown in Table 1.

**[Table 1]**

| | Pressure during gas injection (10⁻³ Torr) | Bias (kV) | Ion implantation time (min) | RF plasma power (W) | Frequency (Hz) | Pulse width (µ sec) | Expected ion dose (cm⁻²) |
|---|---|---|---|---|---|---|---|
| Carbon implantation (CH₄ gas) | 2 | -60 | 9 | 200 | 100 | 30 | 5x10¹⁶ |
| Nitrogen implantation (N₂ gas) | 2 | -60 | 15 | 200 | 100 | 30 | 5x10¹⁶ |

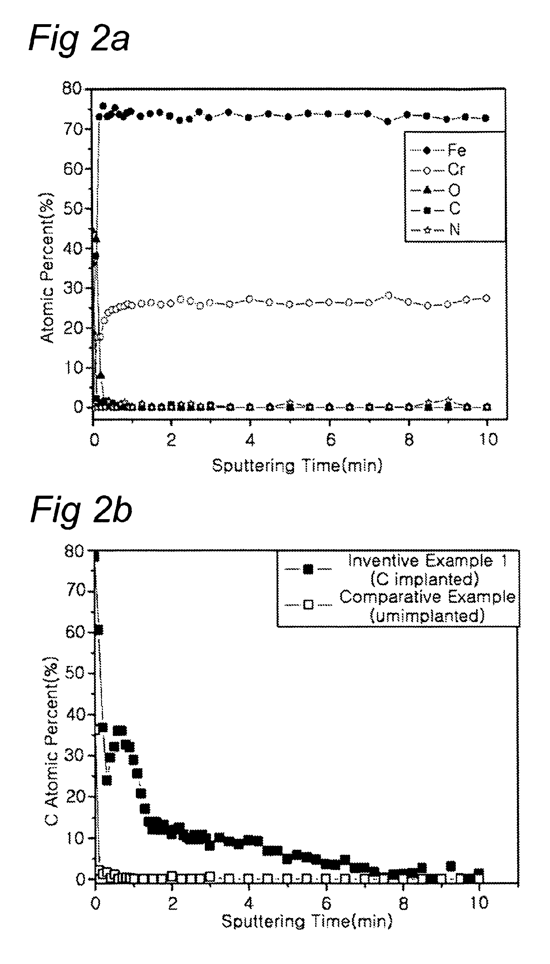

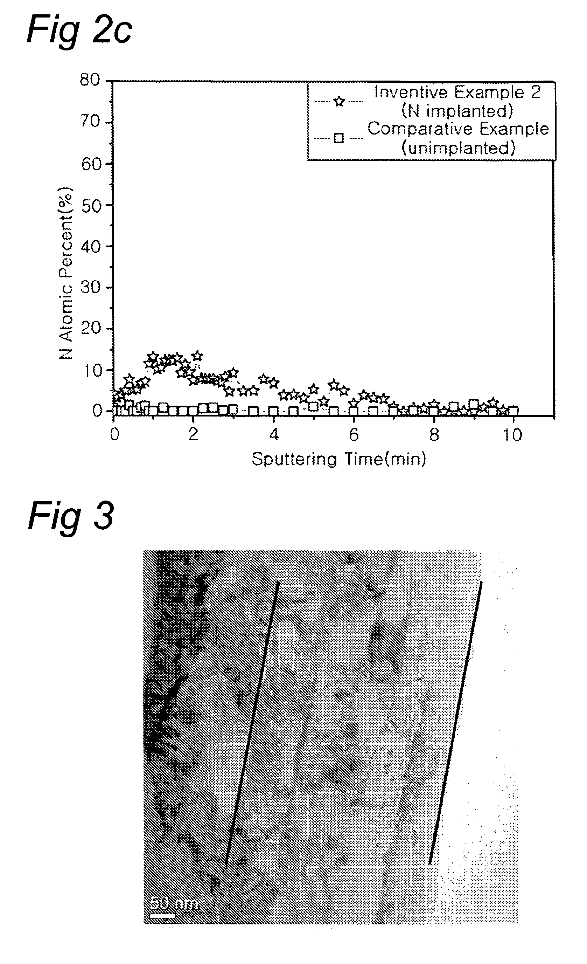

After performing carbon (C) ion and nitrogen (N) ion implantation using the above-described method, Auger electron spectroscopic analysis was performed by milling the test specimens in a thickness direction, and the results thereof are shown in FIGS. 2A to 2C. The result, as shown in FIG. 2A, corresponds to an unimplantated comparative example, the result, shown in FIG. 2B, corresponds to a carbon (C) ion implanted inventive example 1, and the result, shown in FIG. 2C, corresponds to an nitrogen (N) ion implanted inventive example 2.

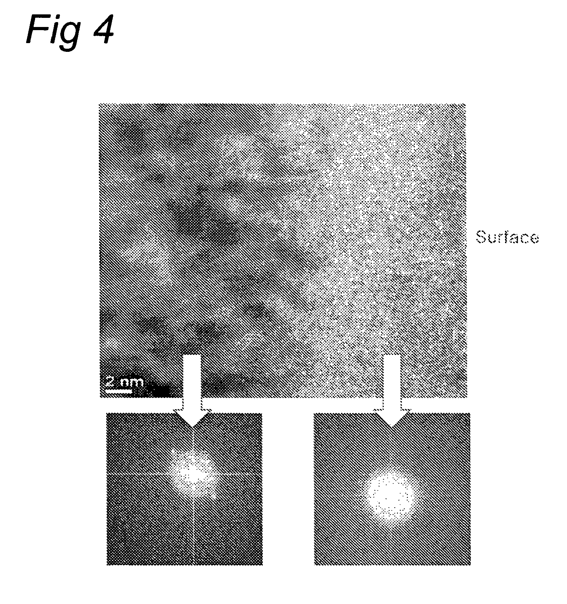

For Auger electron spectroscopic analysis, samples are milled at a rate of approximately 150Å per minute. As shown in FIGS. 2B and 2C, the ion-implantation-affected zone is approximately 100nm. The zone from 15 to 30 has the largest amount of ions being implanted. This zone coincides with an area where a fine amorphous structure is formed, the area observed in FIG. 4.

FIG. 3 is a photograph showing a surface area of the inventive example 1. As shown in FIG. 3, when C ion implantation is performed, a deformed structure having a thickness of 400 nm in parallel with the surface layer is formed. It can be seen that a nano-crystal structure and an amorphous structure are formed on the outermost surface through HR image analysis as shown in FIG. 4.

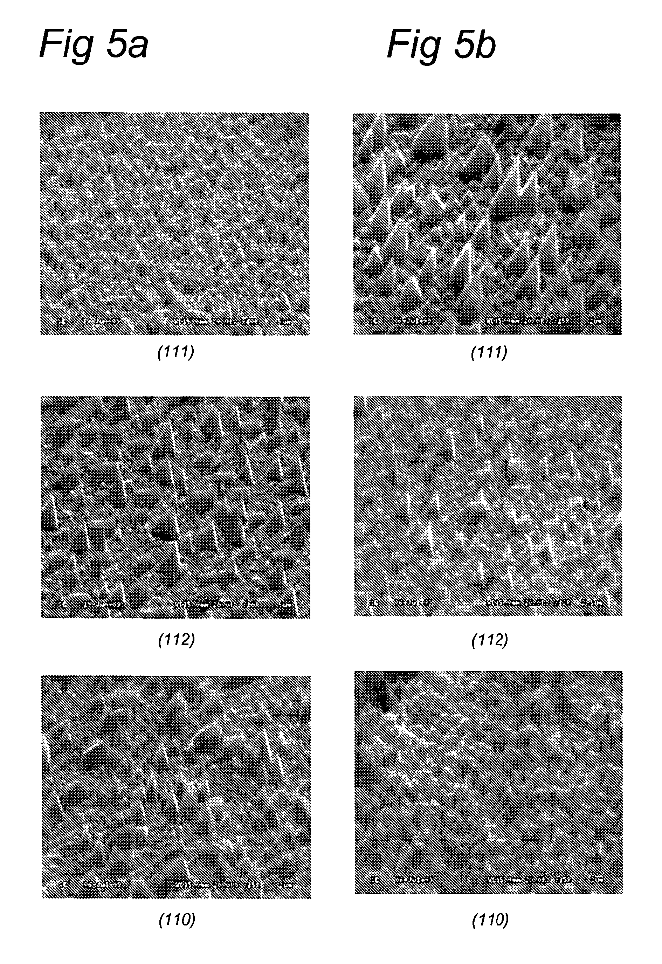

FIGS. 5A and 5B are SEM photographs according to the surface crystal planes on the surface areas of the comparative example and the inventive example 1, respectively. From the SEM photographs, shown in FIGS. 5A and 5B, the shapes of oxides are compared when oxidation is carried out after ion implantation. As shown in FIGS. 5A and 5B, as compared to the comparative example, the shapes of oxides were changed when oxidation was carried out after C ion implantation in the inventive example 1. That is, triangular oxides were observed in the (111) plane, while fine oxides were observed in the (110) and (100) planes.

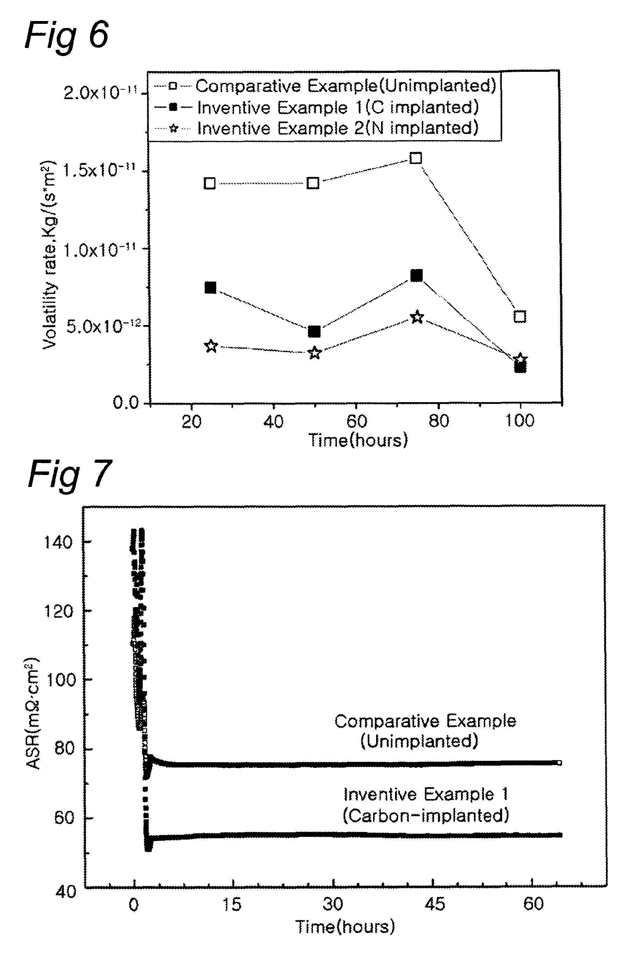

FIG. 6 depicts a graph illustrating the results of measuring Cr volatility rates over time with respect to the comparative example and the inventive examples 1 and 2. As shown in the graph of FIG. 6, Cr volatility was reduced to approximately one third when C or N ions were implanted.

Furthermore, in order to check an increase in electrical conductivity, the Area Specific resistances (ASR) of the comparative example and the inventive example 1 were measured, and the measured results thereof are shown in FIG. 7. As shown in FIG. 7, the C ion implanted inventive example 1 had a low ASR, which showed that electrical conductivity was increased.

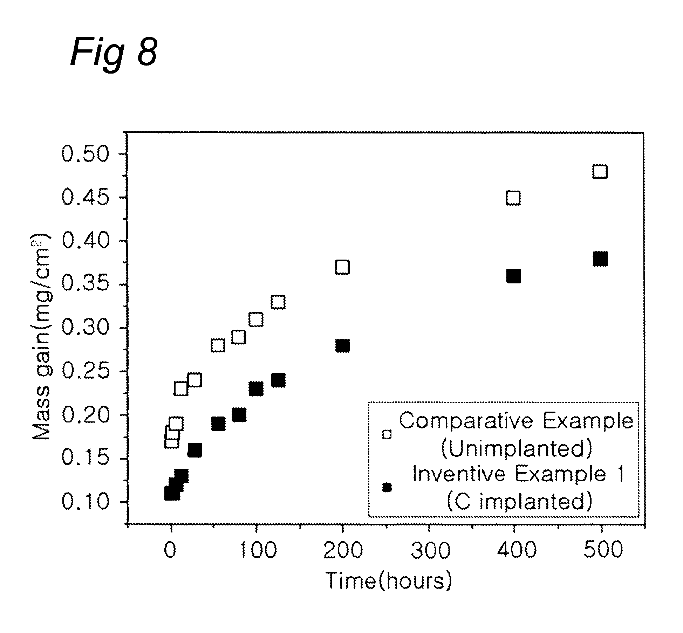

In order to check the oxidation of each the comparative example and the inventive example 1, mass gain of sample over time was measured, and the measured results are shown in FIG. 8. As shown in FIG. 8, the excellent oxidation resistance of the inventive example 1 was maintained even after 500 hours of operation.

As set forth above, according to exemplary embodiments of the invention, the amount of Cr to be volatilized from a fuel cell interconnector is significantly reduced, electrical conductivity is increased, and oxidation resistance is increased, thereby markedly improving the performance of the entire fuel cell.

Specific embodiments are described hereafter, with nummer only for reference purposes.

A method embodiment 1 of manufacturing a fuel cell interconnector having excellent electrical conductivity, oxidation resistance, and low chromium volatility, the method comprising:
preparing a ferritic steel for a fuel cell interconnector;
forming a surface-deformed layer on a surface of the ferritic steel; and
forming a Cr2MnO4 spinel oxide layer by performing heat treatment at an operating temperature of a solid oxide fuel cell.

The method of method embodiment 1, wherein the surface-deformed layer comprises a nano-crystal structure or an amorphous structure.

The method of method embodiment 1, wherein the surface-deformed layer comprises an amorphous structure

The method of any one of method embodiment 1-3, wherein the surface-deformed layer is formed by any one of ion implantation, shot pinning, radio frequency processing, and skin pass rolling.

The method of any one of method embodiments 1-4, wherein the operating temperature is within a range of 500 to 900°C.

A fuel cell interconnector embodiment 1 having excellent electrical conductivity, oxidation resistance, and low chromium volatility, comprising: a surface-deformed layer provided on a surface of a ferritic steel for a fuel cell interconnector and promoting formation of a Cr2Mn04 spinel oxide layer.

The fuel cell interconnector of the fuel cell interconnector embodiment 1, wherein the Cr2MnO4 spinel oxide layer is uniformly provided on a surface of the fuel cell interconnector from the beginning of an operation of a fuel cell.

## Claims

1. A method of manufacturing a fuel cell interconnector having excellent electrical conductivity, oxidation resistance, and low chromium volatility, the method comprising:
preparing a Fe-Mn-Cr ferritic stainless steel for a fuel cell interconnector;
forming a surface-deformed layer on a surface of the ferritic steel by ion implantation; and
forming a Cr₂MnO₄ spinel oxide layer by performing heat treatment at an operating temperature of a solid oxide fuel cell.

2. The method of claim 1, wherein the surface-deformed layer comprises a nano-crystal structure.

3. The method of claim 1, wherein the surface-deformed layer comprises an amorphous structure.

4. The method of any one of claims 1-3, wherein the operating temperature is within a range of 500 to 900°C.

## Patentansprüche

1. Verfahren zur Herstellung eines Brennstoffzellenzwischenverbinders, welcher eine ausgezeichnete elektrische Leitfähigkeit, Oxidationsbeständigkeit und geringe Chromflüchtigkeit aufweist, wobei das Verfahren umfasst:
Erzeugen eines ferritischen, rostfreien Fe-Mn-Cr-Stahls für einen Brennstoffzellenzwischenverbinder;
Bilden einer oberflächenverformten Schicht auf einer Oberfläche des ferritischen Stahls durch lonenimplantation; und
Bilden einer Cr₂MnO₄-Spinelloxidschicht durch Durchführen einer Wärmebehandlung bei einer Betriebstemperatur einer Festoxidbrennstoffzelle.

2. Verfahren nach Anspruch 1, wobei die oberflächenverformte Schicht eine nanokristalline Struktur umfasst.

3. Verfahren nach Anspruch 1, wobei die oberflächenverformte Schicht eine amorphe Struktur umfasst.

4. Verfahren nach einem der Ansprüche 1 bis 3, wobei die Betriebstemperatur innerhalb eines Bereiches von 500 bis 900°C ist.

## Revendications

1. Procédé de fabrication d'un interconnecteur de pile à combustible présentant d'excellentes conductivité électrique, résistance à l'oxydation, et une faible volatilité du chrome, le procédé comprenant :
la préparation d'un acier inoxydable ferritique de Fe-Mn-Cr pour un interconnecteur de pile à combustible ;
la formation d'une couche déformée en surface sur une surface de l'acier ferritique par implantation d'ions ; et
la formation d'une couche d'oxyde de spinelle de Cr₂MnO₄ par réalisation d'un traitement thermique à une température de fonctionnement d'une pile à combustible à oxyde solide.

2. Procédé selon la revendication 1, dans lequel la couche déformée en surface comprend une structure nanocristalline.

3. Procédé selon la revendication 1, dans lequel la couche déformée en surface comprend une structure amorphe.

4. Procédé selon l'une quelconque des revendications 1-3, dans lequel la température de fonctionnement se trouve dans un intervalle de 500 à 900°C.
